# EUROPÄISCHE PATENTSCHRIFT

(11) **EP 0 548 919 B1**
(45) Veröffentlichungstag und Bekanntmachung des Hinweises auf die Patenterteilung: **20.03.1996**
(21) Anmeldenummer: 92121812.9
(22) Anmeldetag: 22.12.1992
(51) Int. Cl.: A22B 7/00

(54) **Schlachthofanlage mit mehreren Schlachtlinen**
Slaughter-house with several slaughter-lines
Abattoir avec plusieurs lignes d'abattage

(30) Priorität: 23.12.1991 DE 4142864
(43) Veröffentlichungstag der Anmeldung: 30.06.1993
(73) Patentinhaber: Banss Maschinenfabrik GmbH & Co. KG, D-35216 Biedenkopf (DE)
(72) Erfinder: Runkel, Gerhard, W-6347 Angelburg-Gönnern (DE)
(74) Vertreter: Klunker . Schmitt-Nilson . Hirsch

(56) Entgegenhaltungen:
- DE-A- 2 044 626
- DE-C- 880 868
- FR-A- 418 865

## Beschreibung

Die Erfindung betrifft eine Schlachthofanlage mit mindestens zwei nebeneinander verlaufenden Schlachtlinien, insbesondere einer Schweineschlachtlinie und einer Rinderschlachtlinie, die aufeinanderfolgend angeordnete Arbeitsbereiche aufweisen.

Beim Betrieb moderner Schlachthofanlagen erfolgt die Schlachtung von Schweinen und Rindern längs parallel zueinander verlaufenden Schlachtlinien, die von den Stallungen der angelieferten Schlachttiere bis zu den Kühlräumen zur Lagerung der Schlachttierkörperteile verlaufen. Um den einschlägigen Hygienevorschriften für den Betrieb einer Schlachthofanlage zu genügen, ist es erforderlich, für eine ausreichende hygienische Trennung zwischen den Schlachtlinien und einzelnen Arbeitsbereichen einer Schlachtlinie zu sorgen.

Aufgrund der hintereinanderliegenden Anordnung einzelner Arbeitsbereiche einer Schlachtlinie ist es im Betrieb bekannter Schlachthofanlagen möglich, daß beispielsweise durch eine die Arbeitsbereiche durchquerende Arbeitskraft Verunreinigungen von einem Arbeitsbereich in einen anderen Arbeitsbereich getragen werden. Dies ist beispielsweise dann der Fall, wenn eine Arbeitskraft zur Erreichung ihres Arbeitsplatzes vom sogenannten schmutzigen Bereich einer Schlachtlinie, zu dem beispielsweise der Brüh- und Enthaarungsbereich bei der Schlachtung von Schweinen zählen, in den sogenannten sauberen Bereich, etwa den Bereich Ausschlachtung, Untersuchung und Klassifizierung der Schlachttierkörper, überwechselt.

Der Erfindung liegt die Aufgabe zugrunde, eine Schlachthofanlage vorzuschlagen, bei der eine möglichst weitreichende hygienische Trennung zwischen den Arbeitsbereichen erreicht wird.

Zur Lösung dieser Aufgabe weist die erfindungsgemäße Schlachthofanlage die Merkmale des Anspruchs 1 auf.

Die erfindungsgemäße Schlachthofanlage weist einen zwischen den Schlachtlinien verlaufenden Gang auf, der für eine hygienische Trennung zwischen den Schlachtlinien und durch die bereichsweise Zutrittsmöglichkeit zu den Schlachtlinien auch für eine hygienische Trennung zwischen einzelnen Arbeitsbereichen sorgt.

Durch den Gang ist es den in der Schlachthofanlage beschäftigten Arbeitskräften möglich, ohne Kontakt zu den in den beidseitig zum Gang beförderten Schlachtstücken beziehungsweise ohne Durchquerung eines fremden Arbeitsbereiches den Arbeitsplatz in ihrem Arbeitsbereich aufzusuchen.

Um auch die Kontaktmöglichkeiten mit fremden Arbeitsbereichen möglichst gering zu halten, können vom Gang Zugangswege zu den einzelnen Arbeitsbereichen führen. Die Zugangswege können auch zu Arbeitssektoren führen, in denen Arbeitsbereiche gleicher Hygienestufe zusammengefaßt sind. Durch die in vorgegebenem Abstand von den Arbeitsbereichen verlaufenden Zugangswege wird zudem eine Reduzierung der Unfallgefahr auf dem Weg zum Arbeitsplatz erreicht.

Bei einer mit den Schlachtlinien ebenerdig verlaufenden Anordnung des Ganges erweist es sich als besonders vorteilhaft, diesen von unterhalb oder oberhalb der Schlachtlinienebene her begehbar zu gestalten. Hierzu führt eine Treppe oder ein Aufzug beispielsweise von einem unterhalb der Schlachtlinienebene gelegenen Sozialraum zum Gang, so daß eine aus dem Sozialraum kommende Arbeitskraft den Gang betritt, ohne vorher eine Schlachtlinie betreten zu haben.

Vorteilhaft kann es auch sein, den Sozialraum oder andere Schlachthofnebenräume auf einer Ebene mit dem Gang anzuordnen, um etwa eine möglichst direkte Verbindung zum Gang zu schaffen. Zur sicheren Führung der Arbeitskräfte erweist es sich als vorteilhaft, wenn der Gang mit seitlich angeordneten Begrenzungseinrichtungen versehen ist. Bei Ausgestaltung der Begrenzungseinrichtungen als Seitenwandungen ist zudem eine besonders wirkungsvolle hygienische Trennung der Schlachtlinien erreicht. Die Zugangswege sind dabei durch etwa mittels einer Tür verchließbare Durchtrittsöffnungen erreichbar.

Die Seitenwandungen des Gangs müssen natürlich nicht in jedem Fall als starre Wandungen ausgeführt sein, vielmehr ist jede Ausführung denkbar, die eine den hygienischen Anforderungen genügende Abtrennung der Schlachtlinien voneinander ermöglicht. In diesem Rahmen ist daher auch vorstellbar, daß eine mögliche Seitenwandung als flächige Luftströmung ausgeführt ist, die verhindet, daß etwa Bakterien durch Luftbewegung von der Rinderschlachtlinie zur Schweineschlachtlinie oder umgekehrt übertragen werden.

Neben der Zuführung von Arbeitskräften zu ihren Arbeitsplätzen kann der Gang in seinem oberen Bereich zur Aufnahme von Installationen dienen. So besteht etwa die Möglichkeit, einen Leerhaken-Rückführförderer im oberen Bereich des Gangs zu installieren oder Versorgungsleitungen durch den Gang zu führen.

Bei einer genügend langen Erstreckung des Gangs läßt sich durch den Gang nicht nur eine Trennung der Schlachtlinien voneinander erzielen, sondern vielmehr auch eine Trennung des gesamten Rinderbereichs vom Schweinebereich, so daß auf der einen Seite des Gangs eine Einheit aus Rinderstallungen, Rinderschlachtlinie und Rinderkühlräumen und auf der anderen Seite des Gangs eine Einheit aus Schweinestallungen, Schweineschlachtlinie und Schweinekühlräumen gebildet ist. In diesem Fall erstreckt sich der Gang von einem den Stallungen vorgeordneten Zuliefererbereich bis zu einem an die Kühlräume anschließenden Versandbereich der Schlachthofanlage.

Nachfolgend wird anhand der Zeichnungen ein bevorzugtes Ausführungsbeispiel der Erfindung näher erläutert. Es zeigen:
- Fig. 1: einen mit einem Gang versehene Schlachthofanlage mit einem Stallungsbereich, einem Schlachtbereich und daran anschließendem Kühl- sowie Versandbereich in einer schematischen Gesamtdarstellung,
- Fig. 2: eine vergrößerte schematische Darstellung des Schlachtbereichs aus Fig. 1.

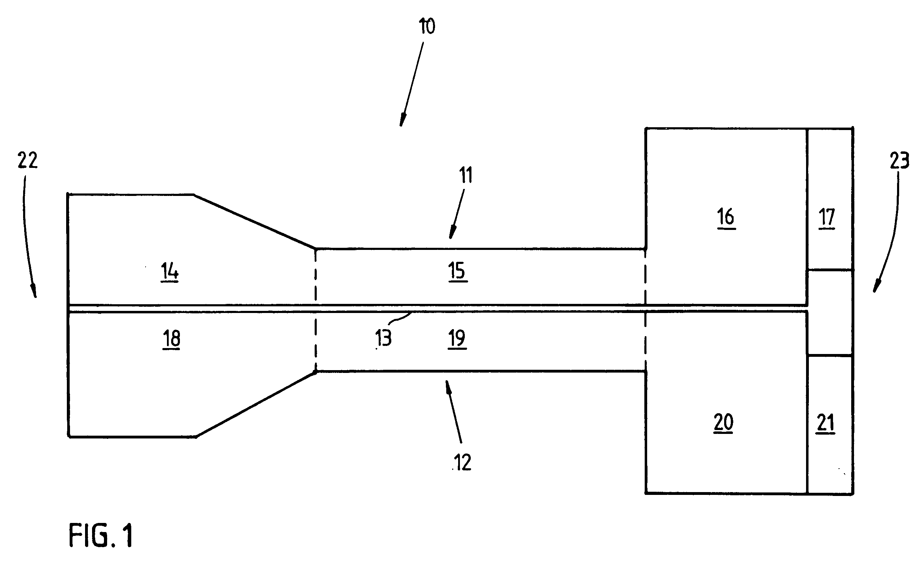

Fig. 1 zeigt in einer schematischen Übersichtsdarstellung eine Schlachthofanlage 10 mit einem diese in zwei Schlachthofbereiche 11, 12 aufteilenden Gang 13. Der Schlachthofbereich 11 ist zur Schlachtung von Schweinen ausgelegt und umfaßt eine Schweinestallung 14, eine daran anschließende Schweineschlachtlinie 15 sowie hieran anschließend einen Schweinekühlraumbereich 16 und eine Versandbereitstellung 17. Der Schlachthofbereich 12 ist als Rinderschlachthofbereich ausgelegt und weist eine Rinderstallung 18, eine daran anschließende Rinderschlachtlinie 19; einen Rinderkühlraumbereich 20 sowie eine Versandbereitstellung 21 auf. Die gesamte Schlachthofanlage 10 erstreckt sich zwischen einem stallungsseitigen Zuliefererbereich 22 und einem kühlraumseitigen Versandbereich 23.

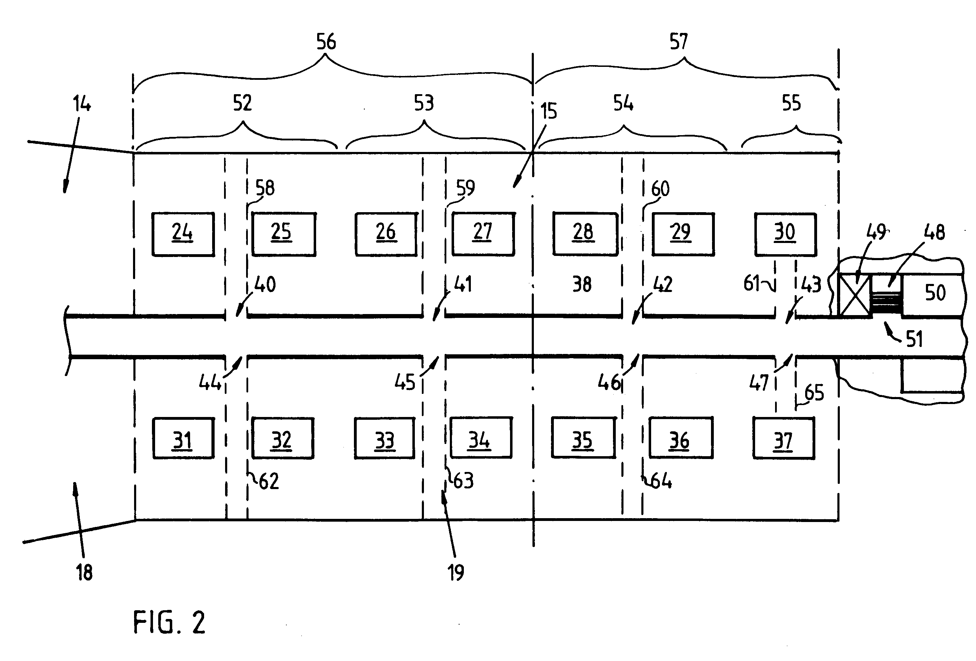

Fig. 2 zeigt die nebeneinander angeordneten Schlachtlinien 15 und 19 in einer vergrößerten Darstellung. Die Schweineschlachtlinie 15 und die Rinderschlachtlinie 19 weisen einen im wesentlichen übereinstimmenden Aufbau aus in Längsrichtung hintereinanderliegend angeordneten einzelnen Arbeitsbereichen 24-37 auf.

Bei der gemäß Fig. 2 beispielhaft aufgebauten Schweineschlachtlinie 15 besteht diese aus einem an die Schweinestallung 14 anschließenden Betäubungsbereich 24, einem Entblutebereich 25, einem Brüh- und Enthaarungsbereich 26, einem Ausschlacht-Vorbereitungs-Bereich 27, in dem die geförderten Schlachttiere, eine Trockenpeitscheinrichtung, einen Flammofen sowie eine Waschmaschine durchlaufen, die hier im einzelnen nicht dargestellt sind, einen Ausschlachtbereich 28, in dem unter anderem die Organentnahme erfolgt, einem Längsspaltbereich 29 sowie einen Untersuchungs- und Klassifizierungsbereich 30, zur Fleischbeschau und Klassifizierung für die nachfolgende Lagerung der Schlachtstücke im Schweinekühlraumbereich 16.

Die Rinderschlachtlinie 19 weist anschließend an die Rinderstallung 18 einen Betäubungsbereich 31, einen Entblutebereich 32, einen Enthäutungsbereich 33, einen Ausschlacht-Vorbereitungs-Bereich 34, in dem unter anderem die Kopfabtrennung erfolgt, einen Ausschlachtbereich 35, einen Längsspaltbereich 36 sowie abschlißend einen Untersuchungs- und Klassifizierungsbereich 37 auf.

Zwischen den Schlachtlinien 15 und 19 ist erfindungsgemäß der Gang 13 angeordnet. Der Gang 13 weist zwei längsseitige Seitenwandungen 38, 39 auf, die mit Durchtrittsöffnungen 40-43 beziehungsweise 40-47 versehen sind. Wie am rechten Rand der Zeichnung erkennbar, ist der mit den Schlachtlinien 15, 19 ebenerdig angeordnete Gang 13 über eine Treppe 48 und einen Aufzug 49 von einem unterhalb der Schlachtlinienebene angeordneten Schlachthofnebenraum 50, etwa ein Sozialraum, durch eine Zutrittsöffnung 51 begehbar. Die Durchtrittsöffnungen 44-47 beziehungsweise 40-43 in der Seitenwandung 39 beziehungsweise 38 sind auf hier nicht näher dargestellte Weise verschließbar.

Die einzelnen Durchtrittsöffnungen 40-47 dienen zum Zutritt in bestimmte Arbeitssektoren 52-55 der Schlachtlinien 15 und 19, die sich, wie in Fig. 2 dargestellt, beispielhaft aus einer bestimmten Zusammenfassung von Arbeitsbereichen 24-37 ergeben. Der Arbeitssektor 52 umfaßt dabei die Arbeitsbereiche 24, 25 beziehungsweise 31, 32, der Arbeitssektor 53 die Arbeitsbereiche 26, 27 beziehungsweise 33, 34, der Arbeitssektor 54 die Arbeitsbereiche 28, 29 beziehungsweise 35, 36 und der Arbeitssektor 55 den Arbeitsbereich 30 beziehungsweise 37. Bei der beispielhaft gewählten Unterteilung ist die Durchtrittsöffnung 40 beziehungsweise 44 für das Betäubungs- und Entblutepersonal, die Durchtrittsöffnung 41 beziehungsweise 45 für das Enthäutungsbeziehungsweise Enthaarungspersonal, die Durchtrittsöffnung 42 beziehungsweise 46 für das Ausschlachtpersonal und die Durchtrittsöffnung 43 beziehungsweise 47 für das Untersuchungspersonal bestimmt.

Wie aus Fig. 2 zu ersehen ist, ermöglichen die einzelnen Durchtrittsöffnungen 40-47 den Zutritt zu bestimmten Arbeitsbereichen beziehungsweise -sektoren über beispielhaft dargestellte Zugangswege 58-65, ohne daß von der ihren Arbeitsplatz aufsuchenden Arbeitskraft ein Betreten oder Durchqueren eines anderen als des ausgewählten Arbeitsbereichs erfolgen muß. Die Zugangswege 58-65 ermöglichen einen vor- und rückseitigen Zutritt zu den Arbeitsbereichen. Beispielsweise ermöglicht der Zugangsweg 58 den Zutritt zu den Arbeitsbereichen 24 und 25. Bereits eine reduzierte Anzahl von Durchtrittsöffnungen, etwa die Auswahl der Durchtrittsöffnungen 40 und 42 für den Zutritt zur Schweineschlacht-Linie 15 und die Durchtrittsöffnungen 44 und 46 für den Zutritt zur Rinderschlachtlinie 19, trägt zu einer erheblichen Reduzierung der möglichen Verunreinigungen im Bereich ein und derselben Schlachtlinie 15 oder 19 bei, da hierdurch ein jeweils separater Zugang für einen schmutzigen Bereich 56 und einen sauberen Bereich 57, an den höhere Anforderungen hinsichtlich der Hygiene zu stellen sind, möglich ist.

Natürlich können die in Fig. 2 beispielhaft dargestellten Zugangswege 58-65 auch eine andere Anzahl oder Verteilung aufweisen. So kann etwa der in Fig. 2 zwischen den Arbeitsbereichen 26 und 27 gelegene Zugangsweg 59 auch zwischen den Arbeitsbereichen 27 und 28 gelegen sein, wobei der Zugangsweg 59 als Abtrennung zwischen dem schmutzigen Bereich 56 und dem sauberen Bereich 57 dienen kann.

Neben der Nutzung für eine gezielte Zuführung der Arbeitskräfte zu ihren Arbeitsplätzen kann der Gang 13, der wie in Fig. 1 dargestellt, in der hier gewählten beispielhaften Ausgestaltung die gesamte Schlachthofanlage 10 längs durchquert auch zur Führung von Versorgungsleitungen, etwa Heißwasser- oder Heißdampfleitungen sowie auch zur Aufnahme eines hier ebenfalls nicht näher dargestellten Leerhaken-Rückführförderers dienen. Der Leerhaken-Rückführförderer kann wie die Versorgungsleitungen auf einfache Art und Weise oberhalb eines für die Fortbewegung der Arbeitskräfte im Gang 13 notwendigen Bewegungsraumes installiert sein und dient beispielsweise zur Rückführung von im Versandbereitstellungsbereich 17 beziehungsweise 21 freiwerdenden Haken in den Ausschlacht-Vorbereitungsbereich 27 beziehungsweise den Enthäutungsbereich 33, wo die Aufnahme der Schlachttierkörper auf Haken erfolgt.

## Patentansprüche

1. Schlachthofanlage mit mindestens zwei nebeneinander verlaufenden Schlachtlinien (15,19), insbesondere einer Schweineschlachtlinie und einer Rinderschlachtlinie, die aufeinanderfolgend angeordnete Arbeitsbereiche aufweisen, dadurch gekennzeichnet, daß zwischen den zwei Schlachtlinien (15;19) ein Gang (13) verläuft, der ohne Kontakt zu den Schlachttieren bzw. Schlachttierstücken begehbar ist, und daß die Arbeitsbereiche (24;25;26;27;28;29;30;31;32;33;34;35;36;37) der zwei Schlachtlinien sich beidseits neben dem Gang befinden und von dem Gang aus, gegebenenfalls über Zugangswege (58;59;60;61;62;63;64;65) zu einzelnen Arbeitsbereichen oder aus mehreren Arbeitsbereichen gebildeten Arbeitssektoren, zugänglich sind.

2. Schlachthofanlage nach Anspruch 1, dadurch gekennzeichnet, daß der Gang (13) von Schlachthofnebenräumen (50), insbesondere Personalräumen, her begehbar ist.

3. Schlachthofanlage nach Anspruch 2, dadurch gekennzeichnet, daß die Schlachthofnebenräume (50) unterhalb oder oberhalb der Ebene des Gangs (13) angeordnet sind.

4. Schlachthofanlage nach Anspruch 3, dadurch gekennzeichnet, daß der Gang (13) über zumindest eine Treppe (48) oder einen Aufzug (49) mit den Schlachthofnebenräumen (50) verbunden ist.

5. Schlachthofanlage nach Anspruch 1 oder 2, dadurch gekennzeichnet, daß sich die Schlachthofnebenräume (50) auf einer Ebene mit dem Gang (13) befinden.

6. Schlachthofanlage nach einem oder mehreren der vorangehenden Ansprüche, dadurch gekennzeichnet, daß der Gang (13) seitliche Begrenzungseinrichtungen (38, 39) aufweist.

7. Schlachthofanlage nach Anspruch 6, dadurch gekennzeichnet, daß die Begrenzungseinrichtungen als Durchtrittsöffnungen (40-47) aufweisende Seitenwandungen (38, 39) ausgebildet sind.

8. Schlachthofanlage nach einem oder mehreren der vorangehenden Ansprüche, dadurch gekennzeichnet, daß der Raum oberhalb des Ganges (13) zumindest abschnittsweise zur Aufnahme von Installationen dient.

9. Schlachthofanlage nach Anspruch 8, dadurch gekennzeichnet, daß der Raum oberhalb des Ganges (13) zur Aufnahme eines Leerhaken-Rückführförderers dient.

10. Schlachthofanlage nach Anspruch 8 oder 9, dadurch gekennzeichnet, daß der Raum oberhalb des Ganges (13) zur Aufnahme von Versorgungsleitungen dient.

11. Schlachthofanlage nach einem oder mehreren der vorangehenden Ansprüche, dadurch gekennzeichnet, daß der Gang (13) die den Schlachtlinien (15, 19) vorgeordneten Stallungen (Schweinestallung 14, Rinderstallung 18) voneinander trennt.

12. Schlachthofanlage nach einem oder mehreren der vorangehenden Ansprüche, dadurch gekennzeichnet, daß der Gang (13) die den Schlachtlinien (15, 19) nachgeordneten Kühlräume (Schweinekühlraumbereich 16, Rinderkühlraumbereich 20) voneinander trennt.

13. Schlachthofanlage nach einem oder mehreren der vorangehenden Ansprüche, dadurch gekennzeichnet, daß sich der Gang (13) von einem Zuliefererbereich (22) zu einem Versandbereich (23) der Schlachthofanlage erstreckt.

## Claims

1. A slaughterhouse comprising at least two slaughter lines (15, 19) extending beside each other, in particular a pig slaughter line and a cattle slaughter line, having working zones arranged in succession,
characterized in that between said two slaughter lines (15; 19) there is provided a passage (13) that is accessible without contact to the animals to be slaughtered or to pieces of the slaughtered animals, and in that the working zones (24; 25; 26; 27; 28; 29; 30; 31; 32; 33; 34; 35; 36; 37) of the two slaughter lines are located on both sides of said passage and are accessible from said passage, possibly via access paths (58; 59; 60; 61; 62; 63; 64; 65) to individual working zones or to working sectors composed of several working zones.

2. A slaughterhouse according to claim 1,
characterized in that the passage (13) is accessible from slaughterhouse side rooms (50), in particular staff rooms.

3. A slaughterhouse according to claim 2,
characterized in that the slaughterhouse side rooms (50) are arranged below or above the plane of the passage (13).

4. A slaughterhouse according to claim 3,
characterized in that the passage (13) is connected to the slaughterhouse side rooms (50) via at least one stair (48) or an elevator (49).

5. A slaughterhouse according to claim 1 or 2,
characterized in that the slaughterhouse side rooms (50) are located on the same level as the passage (13).

6. A slaughterhouse according to one or several ones of the preceding claims,
characterized in that the passage (13) has lateral confinement means (38, 39).

7. A slaughterhouse according to claim 6,
characterized in that the confinement means are in the form of sidewalls (38, 39) having through-openings (40-47).

8. A slaughterhouse according to one or several ones of the preceding claims,
characterized in that the space above the passage (13) serves at least in sections for accommodating installations.

9. A slaughterhouse according to claim 8,
characterized in that the space above the passage (13) serves for accommodating an empty hook return conveyor.

10. A slaughterhouse according to claim 8 or 9,
characterized in that the space above the passage (13) serves for accommodating supply lines.

11. A slaughterhouse according to one or several ones of the preceding claims,
characterized in that the passage (13) separates the stables from each other (pig pen 14, cattle pen 18) that are disposed upstream of the slaughter lines (15, 19).

12. A slaughterhouse according to one or several ones of the preceding claims,
characterized in that the passage (13) separates the cooling rooms from each other (pork cooling zone 16, beef cooling zone 20) that are disposed downstream of the slaughter lines (15, 19).

13. A slaughterhouse according to one or several ones of the preceding claims,
characterized in that the passage (13) extends from a delivery region (22) to a shipment region (23) of the slaughterhouse.

## Revendications

1. Abattoir comprenant au moins deux lignes d'abattage s'étendant l'une à côté de l'autre (15; 19), en particulier une ligne d'abattage de porcs et une ligne d'abattage de boeufs, qui présentent des zones de travail disposées successivement, caractérisé en ce qu'une allée (13) s'étend entre les deux lignes d'abattage (15; 19), sur laquelle il est possible de circuler sans contact avec les animaux de boucherie, respectivement avec les morceaux de viande de boucherie, et en ce que les zones de travail (24; 25; 26; 27; 28; 29; 30; 31; 32; 33; 34; 35; 36; 37) des deux lignes d'abattage se trouvent à côté de l'allée de part et d'autre de celle-ci et sont accessibles de l'allée, le cas échéant par des voies d'accès (58; 59; 60; 61; 62; 63; 64; 65) aux zones de travail individuelles ou à des secteurs de travail formés de plusieurs zones de travail.

2. Abattoir selon la revendication 1, caractérisé en ce que l'allée (13) est accessible des locaux annexes de l'abattoir (50), en particulier des locaux du personnel.

3. Abattoir selon la revendication 2, caractérisé en ce que les locaux annexes de l'abattoir (50) sont disposés au-dessous ou au-dessus du niveau de l'allée (13).

4. Abattoir selon la revendication 3, caractérisé en ce que l'allée (13) est reliée aux locaux annexes de l'abattoir (50) par au moins un escalier (48) ou un ascenseur (49).

5. Abattoir selon la revendication 1 ou 2, caractérisé en ce que les locaux annexes de l'abattoir (50) se trouvent au même niveau que l'allée (13).

6. Abattoir selon l'une ou plusieurs des revendications précédentes, caractérisé en ce que l'allée (13) présente des moyens de délimitation latéraux (38, 39).

7. Abattoir selon la revendication 6, caractérisé en ce que les moyens de délimitation se présentent sous la forme de parois latérales (38, 39) présentant des ouvertures de passage (40 - 47).

8. Abattoir selon l'une ou plusieurs des revendications précédentes, caractérisé en ce que l'espace situé au-dessus de l'allée (13) sert au moins partiellement à recevoir des installations.

9. Abattoir selon la revendication 8, caractérisé en ce que l'espace situé au-dessus de l'allée (13) sert à recevoir un convoyeur de retour des crochets libres.

10. Abattoir selon la revendication 8 ou 9, caractérisé en ce que l'espace situé au-dessus de l'allée (13) sert à recevoir des conduits d'alimentation.

11. Abattoir selon l'une ou plusieurs des revendications précédentes, caractérisé en ce que l'allée (13) sépare l'une de l'autre les étables (étable de porcs 14, étable de boeufs 18) disposées en amont des lignes d'abattage (15, 19).

12. Abattoir selon l'une ou plusieurs des revendications précédentes, caractérisé en ce que l'allée (13) sépare les chambres froides (zone de chambre froide de porcs 16, zone de chambre froide de boeufs 20) disposées en aval des lignes d'abattage (15, 19).

13. Abattoir selon l'une ou plusieurs des revendications précédentes, caractérisé en ce que l'allée (13) s'étend d'une zone de livraison (22) à une zone d'expédition (23) de l'abattoir.
